(19) Europäisches Patentamt
European Patent Office
Office européen des brevets

(11) **EP 4 715 447 A1**

(12) **EUROPEAN PATENT APPLICATION**
published in accordance with Art. 153(4) EPC

(43) Date of publication:
**25.03.2026 Bulletin 2026/13**

(21) Application number: **24822742.3**

(22) Date of filing: **13.06.2024**

(51) International Patent Classification (IPC):
$G02B\ 27/01^{(2006.01)}$    $G02B\ 27/00^{(2006.01)}$
$G02B\ 1/116^{(2015.01)}$    $H05B\ 3/86^{(2006.01)}$
$B32B\ 17/06^{(2006.01)}$    $B32B\ 17/10^{(2006.01)}$
$B32B\ 27/06^{(2006.01)}$    $B32B\ 33/00^{(2006.01)}$

(86) International application number:
**PCT/CN2024/098968**

(87) International publication number:
**WO 2024/255793 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.06.2023 CN 202310704072**

(71) Applicant: **Fuyao Glass Industry Group Co., Ltd.**
**Fuqing, Fujian 350300 (CN)**

(72) Inventors:
• **TSO, Fai**
**Fuqing Fujian 350300 (CN)**

• **HUANG, Fengzhu**
**Fuqing Fujian 350300 (CN)**
• **ZENG, Dong**
**Fuqing Fujian 350300 (CN)**
• **YANG, Bin**
**Fuqing Fujian 350300 (CN)**
• **ZHU, Rui**
**Fuqing Fujian 350300 (CN)**
• **FUKUHARA, Kohta**
**Fuqing Fujian 350300 (CN)**

(74) Representative: **Grassi, Stefano**
**Bugnion S.p.A.**
**Viale Lancetti, 17**
**20158 Milano (IT)**

(54) **HEAD-UP DISPLAY GLASS AND HEAD-UP DISPLAY SYSTEM**

(57)    The present application relates to a head-up display glass and a head-up display system. The head-up display glass includes an outer glass sheet, a thermoplastic interlayer, and an inner glass sheet that are laminated together, and further includes a transparent conducting layer. The transparent conducting layer includes a first metal layer, a second metal layer, a third metal layer, and a fourth metal layer that are sequentially laminated together, with thicknesses satisfy $0.7 \leq Ea4/Ea1 \leq 1.2$. The head-up display glass has a reflectance of at least 15% to projection light incident from the fourth surface at an angle of incidence of 65°, and 40% to 80% of the projection light is S-polarized light and 20% to 60% of the projection light is P-polarized light.

FIG. 1

EP 4 715 447 A1

**Description**

RELATED APPLICATIONS

This application claims priority to Chinese patent application No. 202310704072.3, filed on June 14, 2023, entitled "HEAD-UP DISPLAY GLASS AND HEAD-UP DISPLAY SYSTEM", the content of which is hereby incorporated by reference in its entirety.

TECHNICAL FIELD

The present application relates to the field of head-up display technology, and in particular to a head-up display glass and a head-up display system.

BACKGROUND

With the development of intelligent automobiles, higher requirements are put forward for the integrated functions of automobile glass. Researches related to head-up display (HUD) have become a trend for many automobile manufacturers based on future development. At present, a head-up display system usually includes a projection device and a head-up display glass. The head-up display glass can be used as a front windshield of a vehicle, with an inner surface facing the inside of the vehicle and an outer surface facing the outside of the vehicle. The projection device projects image information onto the inner surface of the head-up display glass, and the image information then enters the driver's eyes through the reflection from the head-up display glass. Projection light generated by conventional projection devices is mainly S-polarized light, which will be reflected at both of the inner surface from air to glass and the outer surface from glass to air, thereby generating two images offset from each other, i.e., a double image phenomenon, and leading to an unclear HUD image and poor visual comfort.

Meanwhile, the front windshield of the vehicle is required to have a heat insulation function and even an electric heating function. A transparent conducting layer can be disposed in the head-up display glass, and include multiple metal layers and multiple dielectric layers. The projection light can also be reflected by the transparent conducting layer to form a third offset image, i.e., a triple image phenomenon, which makes the HUD image more blurred, thereby interfering with the driver's line of sight, affecting driving safety, and worsening the driver's visual comfort.

Most existing projection devices on the market use TFT screens, and the projection light emitted therefrom is mainly S-polarized light, which cannot meet the needs of drivers for wearing sunglasses, because sunglasses usually only allow P-polarized light to pass through while blocking S-polarized light. In recent years, automobile original equipment manufacturers have been actively exploring P-polarized light imaging or non-linear polarized light imaging to meet the needs of customers for wearing sunglasses and market development. For non-linear polarized light imaging, the projection light contains both S-polarized light and P-polarized light, and thus the triple image phenomenon is difficult to be completely eliminated if a transparent conducting layer is present in the head-up display glass.

SUMMARY

In view of this, according to various embodiments of the present application, a head-up display glass and a head-up display system are provided. The technical solutions are as follows.

A head-up display glass includes an outer glass sheet, a thermoplastic interlayer, and an inner glass sheet that are laminated together. The outer glass sheet includes a first surface and a second surface, the inner glass sheet includes a third surface and a fourth surface, and the thermoplastic interlayer is located between the second surface and the third surface.

The head-up display glass further includes a transparent conducting layer. The transparent conducting layer is located on the second surface, or on the third surface, or inside the thermoplastic interlayer. The thermoplastic interlayer has a wedge shape. The transparent conducting layer includes a first metal layer, a second metal layer, a third metal layer, and a fourth metal layer that are sequentially laminated together.

A physical thickness of the first metal layer is denoted as Ea1, a physical thickness of the fourth metal layer is denoted as Ea4, and Ea1 and Ea4 satisfy $0.7 \leq Ea4/Ea1 \leq 1.2$.

The head-up display glass has a reflectance of at least 15% to projection light incident from the fourth surface at an angle of incidence of 65°, 40% to 80% of the projection light is S-polarized light, and 20% to 60% of the projection light is P-polarized light.

A head-up display system includes a projection device and the head-up display glass as described above. The projection device is configured to generate projection light. 40% to 80% of the projection light is S-polarized light, and 20% to 60% of the projection light is P-polarized light. The projection light is configured to be incident to the fourth surface of the head-up display glass at an angle of incidence of 38° to 85°.

In some embodiments, the head-up display system further includes at least one sensor mounted on the fourth surface. A detection signal emitted and/or received by the sensor is capable of passing through the head-up display glass. A region of the head-up display glass for the detection signal to pass through is a signal transmission window, and the transparent conducting layer is not arranged in the signal transmission window.

Details of one or more embodiments of the present application are set forth in the description below. Other features, objectives, and advantages of the present application will be apparent from the specification and claims.

BRIEF DESCRIPTION OF THE DRAWINGS

In order to illustrate the technical solutions in the embodiments of the present application or in the conventional art more clearly, the drawings used for describing the embodiments or the conventional art will be described briefly below. Apparently, the following described drawings are merely for some embodiments of the present application, and other drawings can be derived based on the described drawings by those of ordinary skill in the art without any creative effort.

FIG. 1 is a structural schematic view of a head-up display system provided in an embodiment of the present application.
FIG. 2 is a structural schematic cross-sectional view of a head-up display glass provided in another embodiment of the present application.
FIG. 3 is a structural schematic cross-sectional view of a transparent conducting layer provided in an embodiment of the present application.

DETAILED DESCRIPTION

The technical solutions in the embodiments of the present application will now be described clearly and in detail with reference to the accompanying drawings in the embodiments of the present application. Apparently, the described embodiments are only a part of and not all of the embodiments of the present application. Based on the embodiments in the present application, all other embodiments obtained by those of ordinary skill in the art without any creative effort shall fall within the protection scope of the present application

Unless defined otherwise, all technical and scientific terms used herein have the same meaning as commonly understood by those skilled in the art of the present application. The terms used in the specification of the present application are only for the purpose of describing specific examples and are not intended to limit the present application.

Terms:

Unless otherwise specified or contradicted, terms or phrases used herein have the following meanings.

In the present application, "a plurality of" means at least two, such as two, three, etc., unless otherwise clearly and specifically defined. "Multiple" means at least one, such as one, two, etc., unless otherwise clearly and specifically defined.

In the present application, unless otherwise specified, a numerical range includes both endpoints of the numerical range.

In the present application, "layer" can be understood as a single layer, or laminated multiple layers.

In the present application, an angle of incidence refers to an angle between the projection light generated by the projection device and the normal line of the surface of the head-up display glass on which the projection light is incident.

In the present application, a refractive index refers to the refractive index of transmitted light at a wavelength of 550 nm.

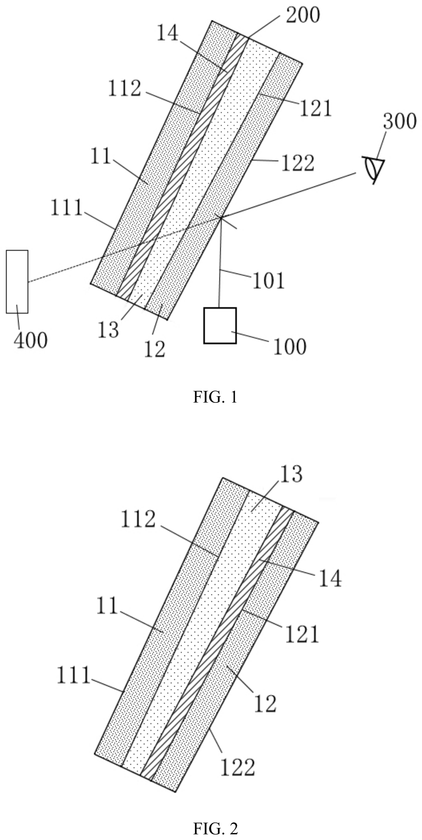

Referring to FIG.1, a head-up display system provided in an embodiment of the present application includes a projection device 100 and a head-up display glass 200. The projection device 100 is configured to generate projection light 101. The head-up display glass 200 includes an outer glass sheet 11, a thermoplastic interlayer 13, an inner glass sheet 12, and a transparent conducting layer 14 that are laminated together. The outer glass sheet 11 includes a first surface 111 and a second surface 112. The inner glass sheet 12 includes a third surface 121 and a fourth surface 122. The thermoplastic interlayer 13 is located between the second surface 112 and the third surface 121. The transparent conducting layer 14 includes a plurality of metal layers, and has a high transmittance to visible light, a high reflectance to infrared rays, and a high electrical conductivity. As a result, the head-up display glass not only achieves the head-up display function but also possesses excellent heat insulation performance and even electric heating performance.

In this embodiment, 40% to 80% of the projection light 101 is S-polarized light, and 20% to 60% of the projection light 101 is P-polarized light. The projection light 101 is configured to be incident to the fourth surface 122 of the head-up display glass 200 at an angle of incidence of 38° to 85°. The projection light 101 can be reflected by the head-up display glass 200 to enter the human eyes 300, so that a head-up display (HUD) image 400 located in front of the head-up display glass 200 can be observed by the human eyes. Specifically, 40% of the projection light 101 is S-polarized light and 60% of the projection light 101 is P-polarized light, or 50% of the projection light 101 is S-polarized light and 50% of the projection light 101 is P-polarized light, or 60% of the projection light 101 is S-polarized light and 40% of the projection light 101 is P-polarized light, or 70% of the projection light 101 is S-polarized light and 30% of the projection light 101 is P-polarized light, or 80% of the projection light 101 is S-polarized light and 20% of the projection light 101 is P-polarized light. Preferably, 50% to 70% of the projection light 101 is S-polarized light and 30% to 50% of the projection light 101 is P-polarized light, which can satisfy the relatively high brightness requirement for the head-up display image and the need of the drivers for wearing sunglasses.

It can be understood that the outer glass sheet 11, the inner glass sheet 12, the thermoplastic interlayer 13, and the transparent conducting layer 14 are laminated along a thickness direction of the head-up display glass 200. The first surface 111 of the outer glass sheet 11 faces the outside of a vehicle and is farther from the thermoplastic interlayer 13 than the second surface 112. The fourth surface 122 of the inner glass sheet 12 faces the inside of the vehicle and is farther from the thermoplastic interlayer 13 than the third surface 121. The thermoplastic interlayer 13 is sandwiched between the second surface 112 and the third surface 121, and is configured to bond the outer glass sheet 11 and the inner glass sheet 12 together to form a laminated glass structure. A material of the thermoplastic interlayer 13 can be selected from polyvinyl butyral (PVB), ethylene vinyl acetate (EVA), an ionomer polymer film SGP, etc. The thermoplastic interlayer 13 can be a single-layer structure or a multi-layer structure, such as a two-layer structure, a three-layer structure, a four-layer structure, or even a five-layer structure. For example, the thermoplastic interlayer 13 is three PVB layers, wherein one PVB layer has a relatively high content of plasticizer, so that the head-up display glass 200 has a sound insulation function, and at least one PVB layer has a wedge shape so that the head-up display glass 200 can eliminate a part of the ghosting phenomenon.

The transparent conducting layer 14 is located on the second surface 112, or on the third surface 121, or inside the thermoplastic interlayer 13. In this embodiment, as shown in FIG. 1, the transparent conducting layer 14 is directly disposed on the second surface 112. In another embodiment, as shown in FIG. 2, the transparent conducting layer 14 is directly disposed on the third surface 121. In yet another embodiment, the transparent conducting layer 14 is directly disposed on a thermoplastic film. A material of the thermoplastic film can be selected from polyethylene terephthalate (PET), polyethylene naphthalate (PEN), polyimide (PI), cellulose triacetate (TAC), etc. The thermoplastic film provided with the transparent conducting layer 14 is sandwiched between the second surface 112 and the third surface 121. Specifically, the thermoplastic film provided with the transparent conducting layer 14 can be located between the second surface 112 and the thermoplastic interlayer 13, or located between the thermoplastic interlayer 13 and the third surface 121, or located inside the thermoplastic interlayer 13. For example, the thermoplastic interlayer 13 includes two layers of transparent PVB, and the thermoplastic film provided with the transparent conducting layer 14 is sandwiched between the two layers of transparent PVB. The transparent conducting layer 14 can be deposited on the second surface 112, the third surface 121, or the thermoplastic film by a magnetron sputtering process.

The head-up display glass 200 of this embodiment has no special requirements for the projection light 101 emitted by the projection device 100, can get rid of the limitations of conventional TFT screen projector, does not need a linear polarization design on an ordinary screen projection, and can be used with projectors with a wider range of screen types, such as OLED, LCD, etc. In other words, the projection light 101 in the present application is a mixed polarized light containing both S-polarized light and P-polarized light, such as natural light, partially polarized light, circularly polarized light, elliptically polarized light, etc., which can satisfy both the high brightness requirement for the head-up display image and the need of the drivers for wearing sunglasses.

It can be understood that during forming the head-up display (HUD) image 400, the projection light 101 will be respectively reflected from the fourth surface 122, the transparent conducting layer 14, and the first surface 111. The image formed by the reflection from the fourth surface 122 is taken as the HUD main image, the image formed by the reflection from the first surface 111 is taken as a first ghost image, and the image formed by the reflection from the transparent conducting layer 14 is taken as a second ghost image. In order to directly eliminate the first ghost image, the thermoplastic interlayer 13 used in this embodiment has a wedge shape. Compared to conventional thermoplastic interlayers with uniform thickness, the wedge-shaped thermoplastic interlayer 13 can achieve the alignment of the first ghost image and the HUD main image, thereby eliminating the visual ghosting. In this embodiment, when the head-up display glass 200 is installed on a vehicle as a front windshield, the thermoplastic interlayer 13 has a wedge shape, with a thickness at its upper end greater than that at its lower end. Preferably, the wedge shape has at least one wedge angle, and the wedge angle is ranged from 0.05 milliradians (mrad) to 0.6 mrad. Specifically, the wedge shape can have a constant wedge angle, such as 0.05 mrad, 0.1 mrad, 0.15 mrad, 0.2 mrad, 0.25 mrad, 0.3 mrad, 0.35 mrad, 0.4 mrad, 0.45 mrad, 0.5 mrad, 0.55 mrad, 0.6 mrad, etc. Alternatively, the wedge shape can have a plurality of constant wedge angles, such as two constant wedge angles, three constant wedge angles, or even more constant wedge angles. The two constant wedge angles can be a first wedge angle of 0.38 mrad for realizing the HUD image, and a second wedge angle of 0.10 mrad for realizing a camera window without perspective ghosting. The three constant wedge angles can be a first wedge angle of 0.5 mrad for realizing a first HUD image, a first wedge angle of 0.4 mrad for realizing a second HUD image, and a third wedge angle of 0.2 mrad for realizing a third HUD image, etc. In the section with a constant wedge angle, the thickness of the wedge-shaped changes linearly. It can be understood that the wedge shape can alternatively have a continuously varied wedge angle, which causes the thickness of the wedge-shaped to change nonlinearly. The continuously varied wedge angle can result in a head-up display image with a relatively large field of view (FOV) angle and a relatively large image size without visual ghosting.

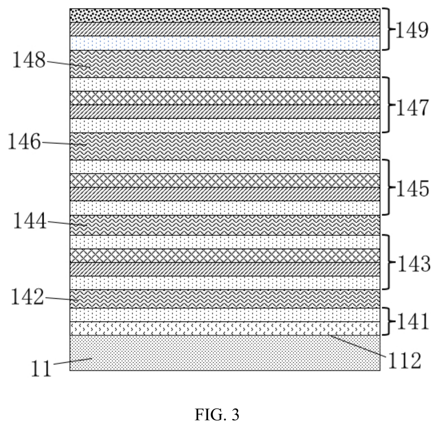

In this embodiment, as shown in FIG. 3, the transparent conducting layer 14 includes a first dielectric layer 141, a first metal layer 142, a second dielectric layer 143, a second metal layer 144, a third dielectric layer 145, a third metal layer 146, a fourth dielectric layer 147, a fourth metal layer 148, and a fifth dielectric layer 149, which are laminated sequentially along the thickness direction of the head-up display glass 200. In this embodiment, when the transparent conducting layer 14 is deposited on the second surface 112 through a magnetron sputtering process, the first dielectric layer 141 is directly deposited on the second surface 112, and the first metal layer 142, the second dielectric layer 143, the second metal layer 144, the third dielectric layer 145, the third metal layer 146, the fourth dielectric layer 147, the fourth metal layer 148, and the fifth dielectric layer 149 are sequentially away from the second surface 112. In another embodiment, when the transparent conducting layer 14 is deposited on the third surface 121 through the magnetron sputtering process, the first dielectric layer 141 is directly deposited on the third surface 121, and the first metal layer 142, the second dielectric layer 143, the second metal layer 144, the third dielectric layer 145, the third metal layer 146, the fourth dielectric layer 147, the fourth metal layer 148, and the fifth dielectric layer 149 are sequentially away from the third surface 121. In yet another embodiment, when the transparent conducting layer 14 is deposited on the thermoplastic film through the magnetron sputtering process, the first dielectric layer 141 is directly deposited on the thermoplastic film, and the first metal layer 142, the second dielectric layer 143, the second metal layer 144, the third dielectric layer 145, the third metal layer 146, the fourth dielectric layer 147, the fourth metal layer 148, and the fifth dielectric layer 149 are sequentially away from the thermoplastic film. Regarding the second ghost image formed by reflection from the transparent conducting layer 14, the present application designs a film system in the transparent conducting layer 14, so that the transparent conducting layer 14 has a relatively low reflectance to the projection light 101 with a wavelength of 400 nm to 700 nm or 600 nm to 700 nm. As a result, a brightness ratio (C) of images formed by the projection light 101 with a wavelength of 400 nm to 700 nm incident on the head-up display glass 200 from the fourth surface side at an angle of incidence of 65° is smaller than or equal to 0.15, i.e., C(400~700)≤0.15; and a brightness ratio (C) of images formed by the projection light 101 with a wavelength of 600 nm to 700 nm incident on the head-up display glass 200 from the fourth surface side at an angle of incidence of 65° is smaller than or equal to 0.3, i.e., C(600~700)≤0.3. As such, the head-up display glass 200 has heat insulation and electric heating functions, while greatly reducing the brightness and recognition degree of the ghost image formed by the light reflection from the transparent conducting layer 14, which is conducive to eliminating the visual ghosting, thereby improving the thermal comfort, visual comfort, and driving safety. Meanwhile, in order to achieve a better head-up display effect, the head-up display glass 200 has a reflectance of at least 15% to the projection light 101 incident from the fourth surface at an angle of incidence of 65°, for example, has a reflectance of 15%, 16%, 17%, 18%, 19%, 20%, 21%, 22%, 23%, etc.

Materials of the first metal layer 142, the second metal layer 144, the third metal layer 146, and the fourth metal layer 148 are independently one or more selected from silver and silver alloys. The silver alloy is preferably an alloy of silver and at least one of gold, aluminum, copper, indium, and platinum.

A physical thickness of the first metal layer 142 is denoted as Ea1, and a physical thickness of the fourth metal layer 148 is denoted as Ea4, and Ea1 and Ea4 satisfy $0.7 \leq Ea4/Ea1 \leq 1.2$. It can be understood that Ea4/Ea1 can be 0.7, 0.75, 0.8, 0.85, 0.9, 0.95, 1, 1.05, 1.1, 1.15, 1.2, etc. Preferably, $0.75 \leq Ea4/Ea1 \leq 1.15$, $0.80 \leq Ea4/Ea1 \leq 1.1$, or $0.80 \leq Ea4/Ea1 \leq 1.05$. More preferably, $0.80 \leq Ea4/Eal \leq 1$. More preferably, $0.80 \leq Ea4/Ea1 \leq 0.95$.

A physical thickness of the second metal layer 144 is denoted as Ea2, and a physical thickness of the third metal layer 146 is denoted as Ea3, and Ea1, Ea2, Ea3 and Ea4 satisfy at least one of the following conditions.

$$(1)\ 0.60 \leq Ea4/Ea2 \leq 0.80.$$

It can be understood that Ea4/Ea2 can be 0.60, 0.65, 0.70, 0.75, 0.80, etc.

$$(2)\ 0.60 \leq Ea4/Ea3 \leq 0.80.$$

It can be understood that Ea4/Ea3 can be 0.60, 0.65, 0.70, 0.75, 0.80, etc.

$$(3)\ Ea1+Ea2+Ea3+Ea4 \geq 40\ \text{nm}.$$

It can be understood that a sum of the physical thicknesses of the four metal layers Ea1+Ea2+Ea3+Ea4 can be 40 nm, 41 nm, 42 nm, 43 nm, 44 nm, 45 nm, 46 nm, 47 nm, 48 nm, 49 nm, 50 nm, 51 nm, 52 nm, 53 nm, 54 nm, 55 nm, 56 nm, etc. Preferably, 45 nm ≤ Ea1+Ea2+Ea3+Ea4 ≤ 55 nm.

(4) At least one of Ea1, Ea2, Ea3, and Ea4 is less than or equal to 11 nm.

It can be understood that it can be that only one of Ea1, Ea2, Ea3, and Ea4 is less than or equal to 11 nm, for example, Ea4≤11 nm; alternatively, it can be that only two of Ea1, Ea2, Ea3, and Ea4 is less than or equal to 11 nm, for example, Ea1≤11 nm and Ea4≤11 nm.

(5) A difference between a maximum value and a minimum value in Eal, Ea2, Ea3, and Ea4 is less than or equal to 5 nm.

It can be understood that the difference between the maximum value and the minimum value in Ea1, Ea2, Ea3, and Ea4 can be 3 nm, 3.5 nm, 4 nm, 4.5 nm, 5 nm, etc.

The first dielectric layer 141 is located on a side of the first metal layer 142 away from the second metal layer 144. The second dielectric layer 143 is located between the first metal layer 142 and the second metal layer 144. The third dielectric layer 145 is located between the second metal layer 144 and the third metal layer 146. The fourth dielectric layer 147 is located between the third metal layer 146 and the fourth metal layer 148. The fifth dielectric layer 149 is located on a side of the fourth metal layer 148 away from the third metal layer 146. Materials of the first dielectric layer 141, the second dielectric layer 143, the third dielectric layer 145, the fourth dielectric layer 147, and the fifth dielectric layer 149 are each independently selected from oxides of Zn, Mg, Sn, Ti, Nb, Zr, Ni, In, Al, Ce, W, Mo, Sb, or Bi, nitrides or nitride oxides of Si, Al, Zr, Y, Ce, or La, and combinations thereof, such as zinc stannate, magnesium-doped zinc stannate, zinc oxide, magnesium-doped zinc oxide, zirconium-doped zinc oxide, niobium oxide, bismuth oxide, aluminum-doped zinc oxide, zirconium oxide, titanium oxide, titanium peroxide, etc. Optionally, the first dielectric layer 141, the second dielectric layer 143, the third dielectric layer 145, the fourth dielectric layer 147, and the fifth dielectric layer 149 each independently include at least two dielectric sublayers. For example, as shown in FIG. 3, the first dielectric layer 141 includes two dielectric sublayers; the second dielectric layer 143, the third dielectric layer 145, and the fourth dielectric layer 147 each include four dielectric sublayers; and the fifth dielectric layer 149 includes three dielectric sublayers. It can be understood that when each dielectric layer is a single-layer structure, its total physical thickness is the physical thickness of the single-layer structure; and when each dielectric layer is a multi-layer structure, its total physical thickness is a sum of the physical thicknesses of all dielectric sublayers of the multi-layer structure.

The total physical thickness of the first dielectric layer is denoted as Eo1, the total physical thickness of the second dielectric layer is denoted as Eo2, the total physical thickness of the third dielectric layer is denoted as Eo3, the total physical thickness of the fourth dielectric layer is denoted as Eo4, and the total physical thickness of the fifth dielectric layer is denoted as Eo5. Eo1, Eo2, Eo3, Eo4, and Eo5 satisfy at least one of the following conditions.

$$(1)\ 0.40 < Eo1/Eo2 < 0.90.$$

It can be understood that Eol/Eo2 can be 0.41, 0.45, 0.50, 0.55, 0.60, 0.65, 0.70, 0.75, 0.80, 0.85, 0.89, etc. Preferably, $0.45 \le Eo1/Eo2 \le 0.80$. More preferably, $0.45 \le Eo1/Eo2 \le 0.70$. Further preferably, $0.45 \le Eo1/Eo2 \le 0.60$.

$$(2)\ 0.40 < Eo1/Eo3 < 0.90.$$

It can be understood that Eo1/Eo3 can be 0.41, 0.45, 0.50, 0.55, 0.60, 0.65, 0.70, 0.75, 0.80, 0.85, 0.89, etc. Preferably, $0.45 \le Eo1/Eo3 \le 0.80$. More preferably, $0.50 \le Eo1/Eo3 \le 0.75$. Further preferably, $0.50 \le Eo1/Eo3 \le 0.65$.

$$(3)\ 0.35 < Eo1/Eo4 < 0.90.$$

It can be understood that Eo1/Eo4 can be 0.36, 0.40, 0.45, 0.50, 0.55, 0.60, 0.65, 0.70, 0.75, 0.80, 0.85, 0.89, etc. Preferably, $0.40 \le Eo1/Eo4 \le 0.80$. More preferably, $0.45 \le Eo1/Eo4 \le 0.70$. Further preferably, $0.50 \le Eo1/Eo4 \le 0.60$.

$$(4)\ 0.50 < Eo1/Eo5 < 1.50.$$

It can be understood that Eo1/Eo5 can be 0.51, 0.55, 0.60, 0.65, 0.70, 0.75, 0.80, 0.85, 0.90, 1.00, 1.05, 1.10, 1.15, 1.20, 1.25, 1.30, 1.35, 1.40, 1.45, 1.49, etc. Preferably, $0.55 \le Eo1/Eo5 \le 1.45$. More preferably, $0.70 \le Eo1/Eo5 \le 1.40$. Further preferably, $0.90 \le Eo1/Eo5 \le 1.35$.

In some embodiments, at least one of the first dielectric layer 141, the second dielectric layer 143, the third dielectric layer 145, the fourth dielectric layer 147, and the fifth dielectric layer 149 includes at least two dielectric sublayers, and a refractive index of at least one of the dielectric sublayers is greater than or equal to 2.0. Preferably, a material of at least one of the dielectric sublayers is TiOx or NbOx, and the TiOx layer and the NbOx layer each has a refractive index greater than or equal to 2.3.

In some embodiments, at least one dielectric sublayer included in at least one of the second dielectric layer 143, the third dielectric layer 145, and the fourth dielectric layer 147 is a visible light absorption layer, and a material of the visible light absorption layer is at least one selected from NiCr, NiCrOx, Ti, ZnSn, and Sn. Preferably, a physical thickness of the visible light absorption layer is denoted as Eo6. Eo6 and Eo1, Eo2, Eo3, Eo4, and Eo5 satisfy: Eo6/(Eo1+Eo2+Eo3+Eo4+Eo5)=0.001 to 0.005, specifically 0.001, 0.0015, 0.002, 0.0025, 0.003, 0.0035, 0.004, 0.0045, 0.005, etc.

The plurality of metal layers and the plurality of dielectric layers can be deposited layer by layer through a magnetron sputtering process. By optimizing the materials and thicknesses of the metal layers and the dielectric layers, the transparent conducting layer 14 can withstand subsequent high-temperature heat treatment and other bending processes. The optical and mechanical performances of the obtained head-up display glass 200 can satisfy the application standards for vehicle glass.

In some embodiments, a visible light reflectance of the head-up display glass 200 measured from the fourth surface side is less than 10%, specifically 9%, 8%, 7%, 6%, 5%, 4%, 3%, 2%, etc., so as to prevent a clear reflection of a vehicle dashboard formed on the head-up display glass 200, as the reflection of the dashboard will seriously affect driving safety and visual comfort.

In some embodiments, a visible light transmittance of the head-up display glass 200 is greater than or equal to 70%, specifically 70%, 71%, 72%, 73%, 74%, 75%, 80%, 85%, etc., so as to satisfy the safety standards for vehicle glass.

In some embodiments, an 8° reflection color and a 65° reflection color of the head-up display glass 200 are measured from the first surface side. The value a in a Lab value of the 8° reflection color is smaller than 0, and the value a in a Lab value of the 65° reflection color is smaller than 0, so that the head-up display glass 200 has an excellent appearance color.

In some embodiments, a sheet resistance of the transparent conducting layer 14 is less than or equal to 0.7 Ω/□, and can be specifically 0.4 Ω/□, 0.45 Ω/□, 0.5 Ω/□, 0.55 Ω/□, 0.6 Ω/□, 0.65 Ω/□, 0.7 Ω/□, etc., so that the head-up display glass 200 has excellent heat insulation performance. Preferably, a total solar energy transmittance of the head-up display glass 200 is less than or equal to 45%, and can be specifically 38%, 39%, 40%, 41%, 42%, 43%, 44%, 45%, etc.

In some embodiments, the transparent conducting layer 14 can further enable the head-up display glass 200 to have excellent electric heating performance, allowing for quickly defrosting, defogging, deicing, and snow removal. In order to achieve the electric heating performance, the head-up display glass 200 further includes a first busbar and a second busbar that are in direct electrical contact with the transparent conducting layer 14. A power supply provides current to the transparent conducting layer through the first busbar and the second busbar. The power supply can provide a voltage of 12 V to 60 V.

In some embodiments, the head-up display system further includes at least one sensor, which is mounted on the fourth surface 122. A detection signal emitted and/or received by the sensor can pass through the head-up display glass 200. A region of the head-up display glass 200 for the detection signal to pass through is a signal transmission window. The transparent conducting layer 14 is not arranged in the signal transmission window, thereby avoiding the interference or blocking of the detection signal by the transparent conducting layer 14. The signal transmission window without the transparent conducting layer 14 can be obtained through a film removal process, such as shielding or covering before film coating, or post-coating film removal methods including laser stripping, friction stripping, chemical etching, etc. The sensor can be a visible light camera, a thermal imager, a laser radar, a millimeter-wave radar, etc.

In the present application, the projection device 100 projects images by three light paths of red, green, and blue (i.e., RGB), and a wavelength of the projection light 101 is ranged from 380 nm to 780 nm, thereby displaying images in any colors. In order to significantly reduce the brightness of the ghost image formed by the reflection from the transparent conducting layer 14 to eliminate the visual ghosting, the brightness ratio (C) of the images formed by the projection light 101 with a wavelength of 400 nm to 700 nm incident on the head-up display glass 200 from the fourth surface side at an angle of incidence of 65° is smaller than or equal to 0.17, i.e., C(400~700)≤0.17, and can be specifically 0.17, 0.16, 0.15, 0.14, 0.13, 0.12, 0.11, 0.10, 0.09, 0.08, 0.07, 0.06, 0.05, 0.04, 0.03, 0.02, 0.01, etc. The smaller the image brightness ratio C(400~700), the easier the elimination of visual ghosting. More preferably, C(400~700) ≤ 0.16. Further preferably, C(400~700) ≤ 0.15. The image brightness ratio C(400~700) can be calculated through C(400~700) =Cf(400~700)/C4(400~700), where C4(400~700) represents a brightness of a head-up display image formed by the HUD main image added with the first ghost image, and Cf(400~700) represents a brightness of the second ghost image formed by reflection from the transparent conducting layer. C4(400~700) and Cf(400~700) can be measured by using a brightness meter, based on an illuminant A and a filter of 400 nm to 700 nm.

In order to reduce the recognition degree of the human eyes to the ghost image formed by the reflection from the transparent conducting layer 14, in an embodiment, a brightness ratio (C) of images formed by the projection light 101 with a wavelength of 600 nm to 700 nm incident on the head-up display glass 200 from the fourth surface side at an angle of incidence of 65° is smaller than or equal to 0.45, i.e., C(600~700)≤0.45, and can be specifically 0.45, 0.44, 0.43, 0.42, 0.41, 0.4, 0.39, 0.38, 0.37, 0.36, 0.35, 0.34, 0.33, 0.32, 0.31, 0.3, 0.29, 0.28, 0.27, 0.26, 0.25, 0.24, 0.23, 0.22, 0.21, 0.20, 0.19, 0.18, 0.17, 0.16, 0.15, etc. The smaller the image brightness ratio C(600-700), the easier the elimination of visual ghosting. More preferably, C(600-700) ≤ 0.4. Further preferably, C(600-700) ≤ 0.35. The image brightness ratio C(600~700) can be calculated through C(600~700)=Cf(600~700)/C4(600~700), where C4(600~700) represents a brightness of a head-up display image formed by the HUD main image added with the first ghost image, and Cf(600~700) represents a brightness of the second ghost image formed by the reflection from the transparent conducting layer. C4(600~700) and Cf(600~700) can be measured by using a brightness meter, based on illuminant A and a filter of 600 nm to 700 nm.

The reflectance values of the head-up display glass 200 to the projection lights 101 with wavelengths of 469 nm, 532 nm, and 629 nm incident from the fourth surface side at an angle of incidence of 65° are denoted as R4(469), R4(532), and R4(629), respectively. In order to achieve a color-neutral display of the HUD image as possible, Preferably, a difference between a maximum value and a minimum value in R4(469), R4(532), and R4(629) is less than or equal to 4%, and can be specifically 4%, 3.5%, 3%, 2.5%, 2%, 1.5%, 1%, etc. The smaller the difference between the maximum value and the minimum value in R4(469), R4(532), and R4(629), the smoother the reflection spectrum, and the more color-neutral the display.

In summary, in the head-up display glass and the head-up display system in the embodiments of the present application, the transparent conducting layer is designed to have a low reflectance to the projection light with a wavelength of 400 nm to 700 nm or 600 nm to 700 nm. As a result, the head-up display glass can have heat insulation and electric heating functions, while greatly reducing the brightness and recognition degree of the ghost image formed by the reflection from the transparent conducting layer, which is conducive to eliminating the visual ghosting, thereby improving the thermal comfort, visual comfort and driving safety.

Meanwhile, the present application has no special requirements for the projection light emitted by the projection device, can get rid of the limitations of conventional TFT screen projection, does not need a linear polarization design on an ordinary screen projection, and can be used with projectors with a wider range of screen types, such as OLED, LCD, etc., thereby satisfying the needs of the drivers for wearing sunglasses.

Comparative Examples 1 to 2 and Examples 1 to 5

Outer glass sheets 11, thermoplastic interlayers 13, and inner glass sheets 12 were prepared. The outer glass sheets 11 and the inner glass sheets 12 each were made of a transparent glass with a thickness of 2.1 mm. The thermoplastic interlayers 13 were each made of a wedge-shaped transparent PVB with an average thickness of 0.76 mm. Transparent conducting layers 14 in Table 1 for Comparative Examples 1 to 2 and Examples 1 to 5 were each deposited on the second surface 112 or the third surface 121 by a magnetron sputtering process. The resulting components were then processed according to the automobile glass production process to obtain the head-up display glasses respectively having the transparent conducting layers 14 in Comparative Examples 1 to 2 and Examples 1 to 5.

Table 1. Transparent conducting layers in Comparative Examples 1 to 2 and Examples 1 to 5

| | Comparative Example 1 | Comparative Example 2 | Example 1 | Example 2 | Example 3 | Example 4 | Example 5 |
|---|---|---|---|---|---|---|---|
| Position of deposition | Third surface | Second surface | Third surface | Third surface | Third surface | Second surface | Second surface |
| First dielectric layer 141 | ZnSnOx 26nm | ZnSnOx 30nm | ZnSnOx 26nm | ZnSnOx 39.1nm | ZnSnOx 26nm | ZnSnOx 26nm | ZnSnOx 30nm |
| | AZO 15nm | AZO 15nm | AZO 15nm | AZO 10nm | $TiO_2$ 5nm | $TiO_2$ 5nm | AZO 15nm |
| | / | / | / | / | AZO 15nm | AZO 15nm | / |
| First metal layer 142 | Ag 10nm | Ag 10nm | Ag 10.5nm | Ag 10.5nm | Ag 10nm | Ag 12nm | Ag 11.5nm |

(continued)

| | | Comparative Example 1 | Comparative Example 2 | Example 1 | Example 2 | Example 3 | Example 4 | Example 5 |
|---|---|---|---|---|---|---|---|---|
| Second dielectric layer 143 | | AZO 10nm | AZO 10nm | AZO 10nm | AZO 10nm | NiCr 0.5nm | AZO 10nm | AZO 10nm |
| | | $TiO_2$ 6nm | ZnSnOx 63nm | $TiO_2$ 6nm | ZnSnOx 63.7nm | AZO 10nm | $TiO_2$ 6nm | ZnSnOx 65nm |
| | | ZnSnOx 59nm | AZO 10nm | ZnSnOx 59nm | AZO 10nm | $TiO_2$ 5nm | ZnSnOx 59nm | AZO 10nm |
| | | AZO 10nm | / | AZO 10nm | / | ZnSnOx 57.8nm | AZO 10nm | / |
| | | / | / | / | / | AZO 10nm | / | / |
| Second metal layer 144 | | Ag 15nm | Ag 10nm | Ag 15nm | Ag 13.5nm | Ag 13nm | Ag 14.7nm | Ag 13.5nm |
| Third dielectric layer 145 | | AZO 10nm | AZO 10nm | AZO 10nm | AZO 10nm | AZO 10nm | AZO 10nm | AZO 10nm |
| | | $TiO_2$ 3.5nm | ZnSnOx 65nm | $TiO_2$ 3.5nm | ZnSnOx 59.3nm | ZnSnOx 60nm | $TiO_2$ 3.5nm | ZnSnOx 59.5nm |
| | | ZnSnOx 55.5nm | AZO 10nm | ZnSnOx 55.5nm | AZO 10nm | AZO 10nm | ZnSnOx 55.4nm | AZO 10nm |
| | | AZO 10nm | / | AZO 10nm | / | / | AZO 10nm | / |
| Third metal layer 146 | | Ag 14.6nm | Ag 10nm | Ag 14nm | Ag 14nm | Ag 14nm | Ag 13.7nm | Ag 13.5nm |
| Fourth dielectric layer 147 | | AZO 10nm | AZO 10nm | AZO 10nm | AZO 10nm | AZO 10nm | AZO 10nm | AZO 10nm |
| | | $TiO_2$ 5nm | ZnSnOx 60nm | $TiO_2$ 5nm | ZnSnOx 64.5nm | $TiO_2$ 5nm | $TiO_2$ 5nm | ZnSnOx 67nm |
| | | ZnSnOx 55nm | AZO 10nm | ZnSnOx 55nm | AZO 10nm | ZnSnOx 59nm | ZnSnOx 61nm | AZO 10nm |
| | | AZO 10nm | / | AZO 10nm | / | AZO 10nm | AZO 10nm | / |
| Fourth metal layer 148 | | Ag 12.5nm | Ag 13nm | Ag 11nm | Ag 10.4nm | Ag 9nm | Ag 9.7nm | Ag 10.5nm |
| Fifth dielectric layer 149 | | AZO 10nm | AZO 10nm | AZO 10nm | AZO 10nm | AZO 10nm | AZO 10nm | AZO 10nm |
| | | ZnSnOx 20nm | ZnSnOx 21nm | ZnSnOx 20nm | ZnSnOx 18nm | ZnSnOx 20nm | ZnSnOx 21nm | $TiO_2$ 5nm |
| | | $Si_3N_4$ 15nm | $Si_3N_4$ 15nm | $Si_3N_4$ 15nm | $Si_3N_4$ 9nm | $Si_3N_4$ 15nm | $Si_3N_4$ 15nm | ZnSnOx 18nm |
| | | / | / | / | / | / | / | $Si_3N_4$ 15nm |

According to the transparent conducting layers in Comparative Examples 1 to 2 and Examples 1 to 5 in Table 1, the film system design conditions to be satisfied by the physical thickness Ea1 of the first metal layer, the physical thickness Ea2 of the second metal layer, the physical thickness Ea3 of the third metal layer, and the physical thickness Ea4 of the fourth metal layer were calculated, and the film system design conditions to be satisfied by the physical thickness Eo1 of the first dielectric layer, the physical thickness Eo2 of the second dielectric layer, the physical thickness Eo3 of the third dielectric layer, the physical thickness Eo4 of the fourth dielectric layer, and the physical thickness Eo5 of the fifth dielectric layer were calculated. The calculation results are shown in Table 2.

Table 2. Film system design conditions for transparent conducting layers in Comparative Examples 1 to 2 and Examples 1 to 5

| | Comparative Example 1 | Comparative Example 2 | Example 1 | Example 2 | Example 3 | Example 4 | Example 5 |
|---|---|---|---|---|---|---|---|
| Ea4/Ea1 | 1.25 | 1.30 | 1.05 | 0.99 | 0.90 | 0.81 | 0.91 |
| Ea4/Ea2 | 0.83 | 1.30 | 0.73 | 0.77 | 0.69 | 0.66 | 0.78 |
| Ea4/Ea3 | 0.86 | 1.30 | 0.79 | 0.74 | 0.64 | 0.71 | 0.78 |
| Ea1+Ea2+ Ea3+Ea4 | 52.1 nm | 43 nm | 50.5 nm | 48.4 nm | 46 nm | 50.1 nm | 49 nm |
| Difference between maximum value and minimum value in Eal, Ea2, Ea3, and Ea4 | 5 nm | 3 nm | 4.5 nm | 3.6 nm | 5 nm | 5 nm | 3 nm |
| Eo1/Eo2 | 0.48 | 0.54 | 0.48 | 0.59 | 0.55 | 0.54 | 0.53 |
| Eo1/Eo3 | 0.52 | 0.53 | 0.52 | 0.62 | 0.58 | 0.58 | 0.57 |
| Eo1/Eo4 | 0.51 | 0.56 | 0.51 | 0.58 | 0.55 | 0.53 | 0.52 |
| Eo1/Eo5 | 0.91 | 0.98 | 0.91 | 1.33 | 1.02 | 1.00 | 0.94 |

Head-up display systems were assembled with the head-up display glasses 200 respectively having the transparent conducting layers 14 in Comparative Examples 1 to 2 and Examples 1 to 5 and projection devices 100. The projection devices 100 generated projection light 101. 50% of the projection light 101 was P-polarized light, and 50% of the projection light 101 was S-polarized light. The projection light 101 was incident on the fourth surface 122 of the head-up display glass 200 at an angle of incidence of 38° to 85°. The position of the projection device 100 and the angle of incidence of the projection light 101 were adjusted to allow the observer to observe a clearest head-up display image. The following optical performances were measured and calculated, and the results are shown in Table 3.

Visible light transmittance TL: The transmittance of the head-up display glass to visible light with a wavelength of 380 nm to 780 nm incident at an angle of incidence of 8° was measured and calculated according to ISO9050.

Visible light reflectance RL: The reflectance of the head-up display glass to visible light with a wavelength of 380 nm to 780 nm incident from the fourth surface side at an angle of incidence of 8° was measured and calculated according to ISO9050.

Projection light reflectance R65: The reflectance of the head-up display glass to projection light with a wavelength of 380 nm to 780 nm incident from the fourth surface side at an angle of incidence of 65° was measured and calculated according to ISO9050.

Reflection color a(8): Measured from the first surface side at an angle of incidence of 8°, based on a D65 light source and an angle of view of 10°, and calculated according to the CIE Lab color space, where the value a represents the red-green value and the value b represents the yellow-blue value.

Reflection color a(65): Measured from the first surface side at an angle of incidence of 65°, based on a D65 light source and an angle of view of 10°, and calculated according to the CIE Lab color space, where the value a represents the red-green value and the value b represents the yellow-blue value.

Image brightness ratio C(400~700): Calculated by C(400~700)=Cf(400~700)/C4(400~700).

C4(400~700): The brightness of the head-up display image formed by the reflection from the head-up display glass, which was measured by using a brightness meter, based on an illuminant A and a filter of 400 nm to700 nm.

Cf(400~700): The brightness of the second ghost image formed by the reflection from the transparent conducting layer, which was measured by using a brightness meter, based on an illuminant A and a filter of 400 nm to700 nm.

Image brightness ratio C(600~700): Calculated by C(600~700)=Cf(600~700)/C4(600 ~700).

C4(600~700): The brightness of the head-up display image formed by the reflection of the head-up display glass, which was measured by using a brightness meter, based on an illuminant A and a filter of 600 nm to700 nm.

Cf(600~700): The brightness of the second ghost image formed by the reflection from the transparent conducting layer, which was measured by using a brightness meter, based on an illuminant A and a filter of 600 nm to700 nm.

R4(469), R4(532), R4(629): The reflectance values of the head-up display glass to the projection lights with wavelengths of 469 nm, 532 nm, and 629 nm incident from the fourth surface side at an angle of incidence of 65°, which was measured according to ISO9050.

Table 3. Measurement results of optical performances of head-up display glasses in Comparative Examples 1 to 2 and Examples 1 to 5

| | Comparative Example 1 | Comparative Example 2 | Example 1 | Example 2 | Example 3 | Example 4 | Example 5 |
|---|---|---|---|---|---|---|---|
| Visible light transmittance TL | 70.72% | 70.59% | 71.76% | 73.08% | 70.67% | 71.52% | 72.27% |
| Visible light reflectance RL | 9.27% | 11% | 8.76% | 8.46% | 8.13% | 9.08% | 8.38% |
| Projection light reflectance R65 | 18.51% | 23.52% | 18.01% | 18.05% | 17.53% | 18.24% | 18% |
| Reflection color a(8) | -3.13 | 10.25 | -2.42 | -1.65 | -1.82 | -4.09 | -0.85 |
| Reflection color a(65) | 1.29 | 8.65 | -0.02 | -0.87 | -0.43 | -1.17 | -0.47 |
| Image brightness ratio C(400~700) | 0.19 | 0.60 | 0.13 | 0.12 | 0.08 | 0.14 | 0.11 |
| Image brightness ratio C(600~700) | 0.40 | 1.03 | 0.29 | 0.28 | 0.18 | 0.27 | 0.23 |
| R4(469) | 22.13% | 21.79% | 21.53% | 19.81% | 19.68% | 21.07% | 20.55% |
| R4(532) | 18.03% | 19.12% | 17.91% | 17.93% | 18.09% | 18.74% | 18.08% |
| R4(629) | 19.28% | 29.12% | 18.01% | 18.58% | 17.00% | 17.95% | 17.99% |

It can be seen from Table 2 and Table 3 that Comparative Example 1 adopted a transparent conducting layer with Ea4/Ea1>1.2, and the prepared head-up display glass exhibited a reddish reflection color as reflected by a(65) and an image brightness ratio C(400~700) greater than 0.18. As a result, the head-up display glass in Comparative Example 1 cannot eliminate the visual ghosting or show satisfactory appearance color on the basis of ensuring that the head-up display glass had heat insulation and electric heating functions.

Comparative Example 2 adopted a transparent conducting layer with Ea4/Ea1 > 1.2, Ea4/Ea2 > 1.2, and Ea4/Ea2 > 1.2. The prepared head-up display glass exhibited seriously reddish reflection colors, as reflected by a(8) and a(65), the image brightness ratio C(400~700) was greater than 0.5, the image brightness ratio C(600~700) was greater than 1, the visible light reflectance RL was greater than 10%, and the difference between the maximum value and minimum value in R4(469), R4(532) and R4(629) was 10%. As a result, the head-up display glass in Comparative Example 2 cannot eliminate the visual ghosting, show satisfactory appearance color, or realize color-neutral display of the head-up display image, and a serious reflection of the dashboard was even observed, on the basis of ensuring that the head-up display glass had heat insulation and even electric heating functions.

Examples 1 to 5 designed film systems for respective transparent conducting layers. For all of the obtained head-up display glasses, the reflection colors a(8) and a(65) were both less than 0, the visible light reflectance RL was less than 10%, the projection light reflectance R65 was greater than 15%, the image brightness ratio C(400~700) was ≤0.15, the image brightness ratio C(600~700) was ≤0.3, and the difference between the maximum value and minimum value in R4(469), R4 (532), and R4(629) was less than 4%. Among them, the difference between the maximum value and minimum value in R4(469), R4(532) and R4(629) in Example 2 was less than 2%; and in Example 3, the image brightness ratio C(400~700) was ≤ 0.1 and C(600~700) was ≤ 0.2. As a result, the head-up display glass in Examples 1 to 5 can eliminate the visual ghosting, exhibit excellent appearance color, and realize color-neutral display of the head-up display image, on the basis of ensuring that the head-up display glass had heat insulation and electric heating functions.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

**Claims**

1. A head-up display glass, comprising an outer glass sheet, a thermoplastic interlayer, and an inner glass sheet that are laminated together, the outer glass sheet comprising a first surface and a second surface, the inner glass sheet comprising a third surface and a fourth surface, and the thermoplastic interlayer being located between the second surface and the third surface;

    **characterized by** further comprising a transparent conducting layer, wherein the transparent conducting layer is located on the second surface, or on the third surface, or inside the thermoplastic interlayer; the thermoplastic interlayer has a wedge shape; the transparent conducting layer comprises a first metal layer, a second metal layer, a third metal layer, and a fourth metal layer that are sequentially laminated together;
    a physical thickness of the first metal layer is denoted as $Ea1$, a physical thickness of the fourth metal layer is denoted as $Ea4$, and $Ea1$ and $Ea4$ satisfy $0.7 \leq Ea4/Ea1 \leq 1.2$;
    the head-up display glass has a reflectance of at least 15% to projection light incident from the fourth surface at an angle of incidence of 65°, 40% to 80% of the projection light is S-polarized light and 20% to 60% of the projection light is P-polarized light.

2. The head-up display glass according to claim 1, wherein a physical thickness of the second metal layer is denoted as $Ea2$, a physical thickness of the third metal layer is denoted as $Ea3$, and $Ea1$, $Ea2$, $Ea3$ and $Ea4$ satisfy at least one of the following conditions:

    (1)

    $$0.80 \leq Ea4/Ea1 \leq 1.1;$$

    (2)

    $$0.60 \leq Ea4/Ea2 \leq 0.80;$$

    (3)

    $$0.60 \leq Ea4/Ea3 \leq 0.80;$$

    (4)

    $$Ea1+Ea2+Ea3+Ea4 \geq 40 \text{ nm};$$

    (5) at least one of $Ea1$, $Ea2$, $Ea3$ and $Ea4$ is less than or equal to 11 nm; and
    (6) a difference between a maximum value and a minimum value in $Ea1$, $Ea2$, $Ea3$, and $Ea4$ is less than or equal to 5 nm.

3. The head-up display glass according to any one of claims 1 to 2, wherein materials of the first metal layer, the second metal layer, the third metal layer, and the fourth metal layer are independently selected from the group consisting of silver, a silver alloy, and any combinations thereof.

4. The head-up display glass according to any one of claims 1 to 3, wherein the transparent conducting layer further comprises a first dielectric layer, a second dielectric layer, a third dielectric layer, a fourth dielectric layer, and a fifth dielectric layer; the first dielectric layer is located on a side of the first metal layer away from the second metal layer, the second dielectric layer is located between the first metal layer and the second metal layer, the third dielectric layer is located between the second metal layer and the third metal layer, the fourth dielectric layer is located between the third metal layer and the fourth metal layer, and the fifth dielectric layer is located on a side of the fourth metal layer away from the third metal layer;

a total physical thickness of the first dielectric layer is denoted as $E_{o}1$, a total physical thickness of the second dielectric layer is denoted as $E_{o}2$, a total physical thickness of the third dielectric layer is denoted as $E_{o}3$, a total physical thickness of the fourth dielectric layer is denoted as $E_{o}4$, and a total physical thickness of the fifth dielectric layer is denoted as $E_{o}5$; $E_{o}1$, $E_{o}2$, $E_{o}3$, $E_{o}4$, and $E_{o}5$ satisfy at least one of the following conditions:

(1)

$$0.40 < E_{o}1/E_{o}2 < 0.90;$$

(2)

$$0.40 < E_{o}1/E_{o}3 < 0.90;$$

(3)

$$0.35 < E_{o}1/E_{o}4 < 0.90;$$

and
(4)

$$0.50 < E_{o}1/E_{o}5 < 1.50.$$

5. The head-up display glass according to claim 4, wherein $E_{o}1$, $E_{o}2$, $E_{o}3$, $E_{o}4$, and $E_{o}5$ satisfy at least one of the following conditions:

(5)

$$0.45 \leq E_{o}1/E_{o}2 \leq 0.60;$$

(6)

$$0.50 \leq E_{o}1/E_{o}3 \leq 0.65;$$

(7)

$$0.50 \leq E_{o}1/E_{o}4 \leq 0.60;$$

and
(8)

$$0.90 \leq E_{o}1/E_{o}5 \leq 1.35.$$

6. The head-up display glass according to any one of claims 4 to 5, wherein at least one of the first dielectric layer, the second dielectric layer, the third dielectric layer, the fourth dielectric layer, and the fifth dielectric layer comprises at least two dielectric sublayers, and a refractive index of at least one of the dielectric sublayers is greater than or equal to 2.0.

7.  The head-up display glass according to claim 6, wherein at least one of the dielectric sublayers is a TiOx layer or a NbOx layer, and each of the TiOx layer and the NbOx layer has a refractive index greater than or equal to 2.3.

8.  The head-up display glass according to any one of claims 6 to 7, wherein at least one dielectric sublayer comprised in at least one of the second dielectric layer, the third dielectric layer, and the fourth dielectric layer is a visible light absorption layer, and a material of the visible light absorption layer is selected from the group consisting of NiCr, NiCrOx, Ti, ZnSn, Sn, and any combinations thereof.

9.  The head-up display glass according to claim 8, wherein a physical thickness of the visible light absorption layer is Eo6, and Eo6 satisfies $Eo6/(Eo1+Eo2+Eo3+Eo4+Eo5)=0.001$ to $0.005$.

10. The head-up display glass according to any one of claims 1 to 9, wherein the head-up display glass satisfies at least one of the following characteristics:

    (1) a visible light reflectance of the head-up display glass measured from the fourth surface is less than 10%; and
    (2) a visible light transmittance of the head-up display glass is greater than or equal to 70%.

11. The head-up display glass according to any one of claims 1 to 10, wherein an 8° reflection color and a 65° reflection color of the head-up display glass are measured from the first surface, a value a in a Lab value of the 8° reflection color is smaller than 0, and a value a in a Lab value of the 65° reflection color is smaller than 0.

12. The head-up display glass according to any one of claims 1 to 11, wherein a sheet resistance of the transparent conducting layer is less than or equal to 0.7 Ω/□.

13. The head-up display glass according to any one of claims 1 to 12, wherein a brightness ratio of images formed by the projection light with a wavelength of 400 nm to 700 nm incident on the head-up display glass from the fourth surface at an angle of incidence of 65° is: $C(400{\sim}700){\leq}0.17$, or $C(400{\sim}700){\leq}0.15$, or $C(400{\sim}700){\leq}0.1$.

14. The head-up display glass according to any one of claims 1 to 13, wherein a brightness ratio of images formed by the projection light with a wavelength of 600 nm to 700 nm incident on the head-up display glass from the fourth surface at an angle of incidence of 65° is: $C(600{\sim}700){\leq}0.45$, or $C(600{\sim}700){\leq}0.4$, or $C(600{\sim}700){\leq}0.3$.

15. The head-up display glass according to any one of claims 1 to 14, wherein reflectance values of the head-up display glass to projection lights with wavelengths of 469 nm, 532 nm and 629 nm incident from the fourth surface at an angle of incidence of 65° are denoted as R4(469), R4(532), and R4(629) respectively, and a difference between a maximum value and a minimum value in R4(469), R4(532) and R4(629) is less than or equal to 4%.

16. The head-up display glass according to any one of claims 1 to 15, wherein the wedge shape has at least one wedge angle, and the wedge angle is ranged from 0.05 mrad to 0.6 mrad.

17. The head-up display glass according to any one of claims 1 to 16, further comprising a first busbar and a second busbar that are in direct electrical contact with the transparent conducting layer, configured for inputting current into the transparent conducting layer from a power supply, and the power supply is capable of providing a voltage of 12 V to 60 V.

18. A head-up display system, comprising a projection device and the head-up display glass according to any one of claims 1 to 17, wherein the projection device is configured to generate projection light, 40% to 80% of the projection light is S-polarized light and 20% to 60% of the projection light is P-polarized light, and the projection light is configured to be incident to the fourth surface of the head-up display glass at an angle of incidence of 38° to 85°.

19. The head-up display system according to claim 18, further comprising at least one sensor mounted on the fourth surface, and a detection signal emitted and/or received by the sensor is capable of passing through the head-up display glass, and
    a region of the head-up display glass for the detection signal to pass through is a signal transmission window, and the transparent conducting layer is not arranged in the signal transmission window.

FIG. 1

FIG. 2

FIG. 3

## INTERNATIONAL SEARCH REPORT

| | International application No. |
|---|---|
| | **PCT/CN2024/098968** |

**A. CLASSIFICATION OF SUBJECT MATTER**

G02B27/01(2006.01)i; G02B27/00(2006.01)i; G02B1/116(2015.01)i; H05B3/86(2006.01)i; B32B17/06(2006.01)i; B32B17/10(2006.01)i; B32B27/06(2006.01)i; B32B33/00(2006.01)i

According to International Patent Classification (IPC) or to both national classification and IPC

**B. FIELDS SEARCHED**

Minimum documentation searched (classification system followed by classification symbols)

IPC:G02B27,G02B1,H05B3,B32B17,B32B27,B32B33

Documentation searched other than minimum documentation to the extent that such documents are included in the fields searched

Electronic data base consulted during the international search (name of data base and, where practicable, search terms used)

CNTXT, ENTXTC, DWPI, VEN, WPABSC: 抬头, 显示, 平视, 中间层, 楔形, 第四, 金属, 导电, 厚, 反射, head up display, intermediate layer, wedge, forth, metal, conducting layer, thickness, reflect+

**C. DOCUMENTS CONSIDERED TO BE RELEVANT**

| Category* | Citation of document, with indication, where appropriate, of the relevant passages | Relevant to claim No. |
|---|---|---|
| PX | CN 116859596 A (FUYAO GLASS INDUSTRY GROUP CO., LTD.) 10 October 2023 (2023-10-10)<br>claims 1-19 | 1-19 |
| X | WO 2023092262 A1 (FUYAO GLASS INDUSTRY GROUP CO., LTD.) 01 June 2023 (2023-06-01)<br>claims 1-20, description, paragraphs [0002]-[0125], and figures 1-3 | 1-19 |
| X | CN 114791675 A (FUYAO GLASS INDUSTRY GROUP CO., LTD.) 26 July 2022 (2022-07-26)<br>description, paragraphs [0002]-[0168], and figures 1-7 | 1-19 |
| X | CN 110520782 A (SAINT-GOBAIN GLASS FRANCE S.A.) 29 November 2019 (2019-11-29)<br>description, paragraphs [0002]-[0092], and figures 1-7 | 1-19 |
| A | CN 113678032 A (VITRO FLAT GLASS LLC) 19 November 2021 (2021-11-19)<br>entire document | 1-19 |
| A | CN 114258508 A (SAINT-GOBAIN GLASS FRANCE S.A.) 29 March 2022 (2022-03-29)<br>entire document | 1-19 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 September 2024** | **30 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2024/098968** |

| Patent document cited in search report | | | Publication date (day/month/year) | Patent family member(s) | | | Publication date (day/month/year) |
|---|---|---|---|---|---|---|---|
| CN | 116859596 | A | 10 October 2023 | None | | | |
| WO | 2023092262 | A1 | 01 June 2023 | EP | 4421552 | A1 | 28 August 2024 |
| CN | 114791675 | A | 26 July 2022 | None | | | |
| CN | 110520782 | A | 29 November 2019 | JP | 2021508378 | A | 04 March 2021 |
| | | | | JP | 7104788 | B2 | 21 July 2022 |
| | | | | US | 2020400945 | A1 | 24 December 2020 |
| | | | | US | 11526009 | B2 | 13 December 2022 |
| | | | | EP | 3769143 | A1 | 27 January 2021 |
| | | | | EP | 3769143 | B1 | 07 June 2023 |
| | | | | MA | 52064 | A | 27 January 2021 |
| | | | | PE | 20200980 | A1 | 01 October 2020 |
| | | | | RU | 2748645 | C1 | 28 May 2021 |
| | | | | MX | 2020009808 | A | 14 October 2020 |
| | | | | KR | 20200121866 | A | 26 October 2020 |
| | | | | KR | 102464962 | B1 | 08 November 2022 |
| | | | | BR | 112020007393 | A2 | 29 September 2020 |
| | | | | WO | 2019179683 | A1 | 26 September 2019 |
| CN | 113678032 | A | 19 November 2021 | KR | 20210145224 | A | 01 December 2021 |
| | | | | KR | 20210145225 | A | 01 December 2021 |
| | | | | CA | 3135160 | A1 | 01 October 2020 |
| | | | | US | 2020309997 | A1 | 01 October 2020 |
| | | | | EP | 3948371 | A1 | 09 February 2022 |
| | | | | JP | 2022527466 | A | 02 June 2022 |
| | | | | JP | 7470133 | B2 | 17 April 2024 |
| | | | | JP | 2022527093 | A | 30 May 2022 |
| | | | | JP | 7545991 | B2 | 05 September 2024 |
| | | | | MX | 2021011429 | A | 13 October 2021 |
| | | | | US | 2020307167 | A1 | 01 October 2020 |
| | | | | WO | 2020198471 | A1 | 01 October 2020 |
| | | | | MX | 2021011656 | A | 22 October 2021 |
| | | | | JP | 2024098985 | A | 24 July 2024 |
| | | | | EP | 3948370 | A1 | 09 February 2022 |
| | | | | CA | 3133828 | A1 | 01 October 2020 |
| | | | | MX | 2021011822 | A | 22 October 2021 |
| | | | | KR | 20210146363 | A | 03 December 2021 |
| | | | | CA | 3134609 | A1 | 01 October 2020 |
| | | | | US | 2020308045 | A1 | 01 October 2020 |
| | | | | JP | 2022527467 | A | 02 June 2022 |
| | | | | WO | 2020198495 | A1 | 01 October 2020 |
| | | | | WO | 2020198480 | A1 | 01 October 2020 |
| | | | | EP | 3948372 | A1 | 09 February 2022 |
| | | | | US | 2023221466 | A1 | 13 July 2023 |
| CN | 114258508 | A | 29 March 2022 | EP | 4182165 | A1 | 24 May 2023 |
| | | | | WO | 2022017707 | A1 | 27 January 2022 |
| | | | | US | 2023228991 | A1 | 20 July 2023 |

Form PCT/ISA/210 (patent family annex) (July 2022)

**EP 4 715 447 A1**

## REFERENCES CITED IN THE DESCRIPTION

**Patent documents cited in the description**

- CN 202310704072